# FASCICULE DE BREVET EUROPEEN

(11) **EP 2 283 321 B1**
(45) Date de publication et mention de la délivrance du brevet: **15.08.2018**
(21) Numéro de dépôt: 09757690.4
(22) Date de dépôt: 27.05.2009
(51) Int. Cl.: G01D 4/00

(54) **PROCEDE POUR RELEVER A DISTANCE DES COMPTEURS ELECTRIQUES**
VERFAHREN ZUR FERNAUSLESUNG ELEKTRISCHER MESSGERÄTE
METHOD FOR REMOTELY READING ELECTRIC METERS

(30) Priorité: 05.06.2008 FR 0803119
(43) Date de publication de la demande: 16.02.2011
(73) Titulaire: Sagemcom Energy & Telecom SAS, 92500 Rueil-Malmaison (FR)
(72) Inventeur: ENDLE, Christophe, F-92500 RUEIL MALMAISON (FR); GISSAT, Rodolphe, F-92500 RUEIL MALMAISON (FR)
(74) Mandataire: Beaudouin-Lafon, Emmanuel
(86) Numéro de dépôt international: PCT/FR2009/000610
(87) Numéro de publication internationale: WO 2009/147314

(56) Documents cités:
- EP-A1- 1 677 270
- US-A1- 2007 073 866
- US-A1- 2007 139 219
- US-A1- 2008 042 874

## Description

L'invention concerne l'établissement à distance de relevés de données de consommation électrique, dans un système comportant un serveur de traitement de données de consommation communiquant avec des compteurs électriques émettant ces données.

### ARRIERE PLAN DE L'INVENTION

L'établissement du relevé d'un compteur électrique consiste à récupérer des données représentatives d'une consommation électrique mesurée par ce compteur, afin de les traiter par exemple pour établir une facture de consommation. Cette opération peut être assurée par un technicien qui note alors les données de consommation qu'affiche chaque compteur, mais plusieurs procédés connus pour effectuer le relevé des compteurs à distance permettent de se dispenser d'un tel technicien.

Chaque compteur est alors équipé d'un modem, pour établir une liaison avec un serveur de traitement de données de consommation, de manière à transférer les données de consommation de chaque compteur vers ce serveur.

La liaison utilisée est généralement une liaison de transmission de données empruntant notamment un réseau de type téléphonique filaire ou mobile, les données pouvant être émises dans ce réseau téléphonique selon différentes voies.

Les données peuvent être émises par voie RTC (Réseau Téléphonique Commuté), c'est à dire par une connexion filaire avec un modem du type de ceux utilisés pour connecter un ordinateur à un fournisseur d'accès internet, généralement appelé modem RTC.

Les donnés peuvent aussi être émises par voie GSM/Data, c'est à dire via une connexion sans fil avec un modem se rapprochant de ceux équipant les téléphones mobiles GSM (Global System for Mobile Communication). L'émission des données est alors analogue à celle de messages de texte au format SMS.

Les données peuvent encore être émises dans le réseau téléphonique par voie GPRS (Global Packet Radio Service), c'est à dire via une connexion établie par un modem sans fil à haut débit, de type GPRS.

Concrètement, les données de consommation de chaque compteur sont transférées les unes après les autres sur le serveur, du fait que chaque compteur doit établir une communication avec le serveur pour transférer ses données.

En pratique, la quantité importante de connexions téléphoniques nécessaires pour assurer la relever de l'ensemble des compteurs isolés d'un parc monopolise une proportion importante des ressources du serveur. Les ressources disponibles pour le traitement des données à proprement parler sont ainsi réduites, ce qui pénalise le temps de traitement de l'ensemble des données de consommation.

Les documents US2008/0042874, US20070139219 et US2007/0073866 décrivent des procédés pour relever à distances des données de consommation électrique selon l'état de la technique.

### OBJET DE L'INVENTION

Le but de l'invention est de proposer une solution pour remédier aux inconvénients ci-dessus.

### RESUME DE L'INVENTION

A cet effet, l'invention a pour objet un procédé pour relever à distance des données de consommation électrique tel que décrit dans la revendication 1 ainsi qu'une unité de collecte telle que décrite dans la revendication 6. Avec cette solution, les données de consommation issues des compteurs isolés sont adressées au serveur de manière groupée, de sorte que le serveur n'a plus à assurer les connexions téléphoniques. Le serveur dispose ainsi d'une plus grande quantité de ressources pour assurer le traitement de données à proprement parler.

L'invention concerne également un procédé tel que défini ci-dessus, dans lequel les données de consommation de plusieurs compteurs isolés distincts sont converties dans un même format avant d'être adressées au serveur.

Le serveur peut ainsi être configuré pour traiter un unique format de données d'entrée, ce qui contribue à améliorer les performances du serveur en ce qui concerne le traitement des données.

L'invention concerne également un système pour la mise en oeuvre du procédé ci-dessus, dans lequel le serveur et l'unité assurant la collecte et la mémorisation temporaire des données de consommation correspondent à des terminaux informatiques distincts.

Avec cette architecture, la collecte des données et leur traitement peuvent être assurer par des opérateurs différents, comme c'est le cas dans la pratique.

L'invention concerne également un système tel que défini ci-dessus, dans lequel l'unité assurant la collecte et la mémorisation temporaire des données de consommation comporte plusieurs terminaux informatiques interconnectés par un réseau local, et en ce que les données de consommation des compteurs isolés sont mémorisées dans au moins deux terminaux distincts de façon redondante.

L'invention concerne également un système tel que défini ci-dessus, dans lequel l'unité assurant la collecte et la mémorisation temporaire des données de consommation comporte un terminal informatique dédié aux transferts de données depuis chaque compteur isolé vers l'unité.

### BREVE DESCRIPTION DES FIGURES

La figure 1 est une représentation schématique du système dans lequel est mise en oeuvre l'invention ;
La figure 2 est une autre représentation schématique représentative d'une unité de collecte et de mémorisation selon l'invention.

### DESCRIPTION DETAILLEE DE L'INVENTION

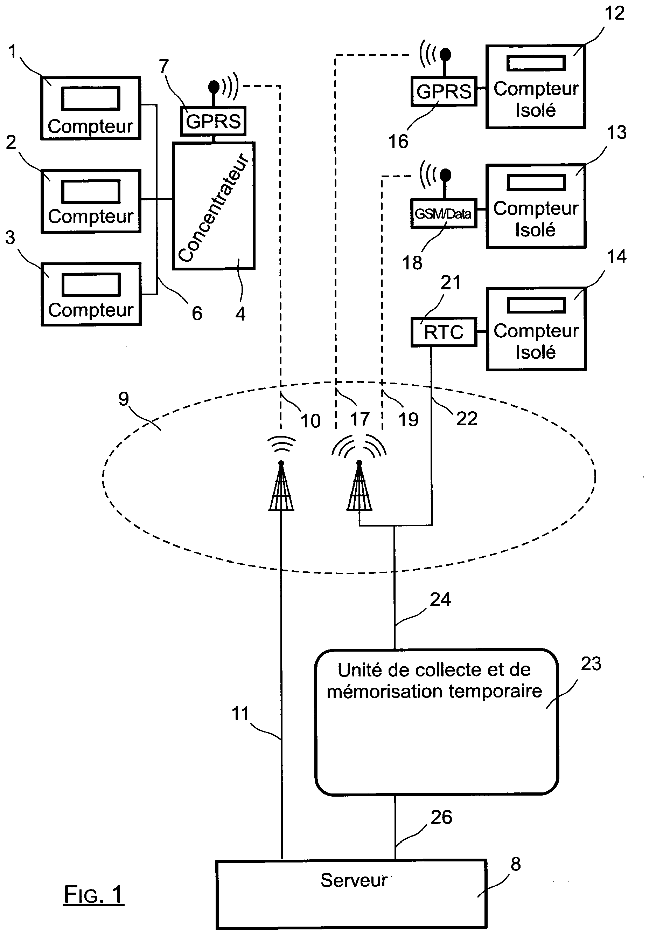

Le système représenté dans la figure 1 comporte un ensemble de trois compteur repérés par 1, 2 et 3 qui sont physiquement proches les uns des autres. Ces compteurs sont réunis en grappe en étant reliés à un unique concentrateur de terrain repéré par 4, par une liaison de transmission de données par courants porteurs en ligne repérée par 6.

Le concentrateur de terrain 4 est apte à échanger de façon bidirectionnelle des données avec chacun de ces trois compteurs 1, 2, 3 de manière à les interroger tour à tour pour récupérer les données de consommation de chacun de ces compteurs. Ce concentrateur de terrain 4 est équipé d'un modem 7, pour transmettre les données de consommation de ces différents compteurs 1, 2 et 3, de façon groupée, à un serveur de traitement de données, repéré par 8.

Ce modem 7 est du type GPRS pour transmettre les données sans fil, par paquets, via une liaison de transmission de données empruntant notamment un réseau de communication de type téléphonique filaire et/ou mobile repéré par 9.

Le réseau 9 est un réseau téléphonique filaire ou mobile permettant notamment de transférer des données numériques, par voie filaire ou sans fil. Elles peuvent être transférées dans ce réseau 9 par voie filaire via un modem de type RTC ou autre. Elles peuvent aussi être transférées dans ce réseau 9 sans fil, via un modem de type GSM/Data ou bien GPRS.

Dans le cas présent, le modem 7 émet les données dans ce réseau 9 par une voie GPRS, représentée symboliquement par un trait discontinu repéré par 10. La liaison par laquelle les données sont transmises du modem 7 au serveur 8 emprunte ensuite une connexion ethernet repérée par 11, par laquelle les données qui ont été acheminées par le réseau téléphonique 9 sont transmises au serveur 8.

Lorsque les données représentatives des consommations des compteurs 1 à 3 sont reçues par le serveur 8, elles sont décomposées et traitées par celui-ci, pour établir par exemple des relevés de consommation correspondants.

Ce système comporte également trois compteurs isolés 12, 13 et 14. Le premier compteur isolé 12 est équipé d'un modem GPRS qui lui est propre, repéré par 16 pour émettre dans le réseau téléphonique 9, par une voie GPRS repérée par 17, les données de consommation de la portion de réseau électrique gérée par ce compteur.

Le second compteur isolé 13 est lui aussi équipé d'un modem qui lui est propre, repéré par 18. Ce modem est du type GSM/Data pour émettre dans le réseau téléphonique 9, par une voie GSM/Data repérée par 19, des données de consommation de la portion de réseau électrique qu'il gère. Le troisième compteur isolé 14 est quant à lui équipé d'un modem de type RTC repéré par 21, pour émettre dans le réseau téléphonique 9, par une voie RTC repérée par 22, les données de consommation relatives à la portion de réseau électrique gérée par ce compteur.

Ainsi, grâce aux moyens de communication que constituent les modems 16, 18 et 21, les trois compteurs isolés 12, 13, 14 émettent vers le réseau téléphonique 9, les données de consommation qui leur sont propres, de façon individuelle.

Les données émises par chacun de ces trois compteurs 12, 13 et 14 sont acheminées par le réseau téléphonique 9, sont ensuite transférées vers une unité 23 de collecte et de mémorisation temporaire, via une connexion 24 pouvant être de type ethernet, et par laquelle cette unité 23 est reliée au réseau téléphonique 9.

Ainsi, la liaison de transmission par laquelle les données de chaque compteur isolé 12, 13, 14 sont transférées emprunte successivement : le réseau téléphonique 9, par voie RTC, GSM/Data ou bien GPRS ; puis la liaison filaire 24, pour atteindre l'unité 23 de collecte et de mémorisation temporaire. Les données de consommation des différents compteurs isolés tels que les compteurs 12, 13, 14 sont ensuite adressées conjointement au serveur 8 par une autre liaison filaire 26 reliant l'unité 23 au serveur 8.

L'unité 23 collecte ainsi les données de consommation issues de chaque compteur isolé 12, 13, 14 pour les mémoriser avant de les envoyer de façon groupée au serveur 8. Comme représenté schématiquement en figure 1, la serveur 8 peut être à cet effet relié à l'unité 23 par une liaison filaire 26 telle qu'une liaison ethernet.

Comme le serveur 8 reçoit les données de consommation issues des compteurs isolés 12 à 14, de façon groupée, il les traite de la même façon que s'il recevait des données de consommation provenant de compteurs réunis en grappe, pour établir des relevés de consommation.

L'unité 23 de collecte et de mémorisation temporaire, constitue un concentrateur virtuel du fait qu'elle présente au serveur 8 des données qui sont groupées de la même façon que si elles avaient été agrégées par le concentrateur de terrain 4 situé en amont du réseau téléphonique 9, alors qu'elles sont en fait agréées en aval du réseau téléphonique 9.

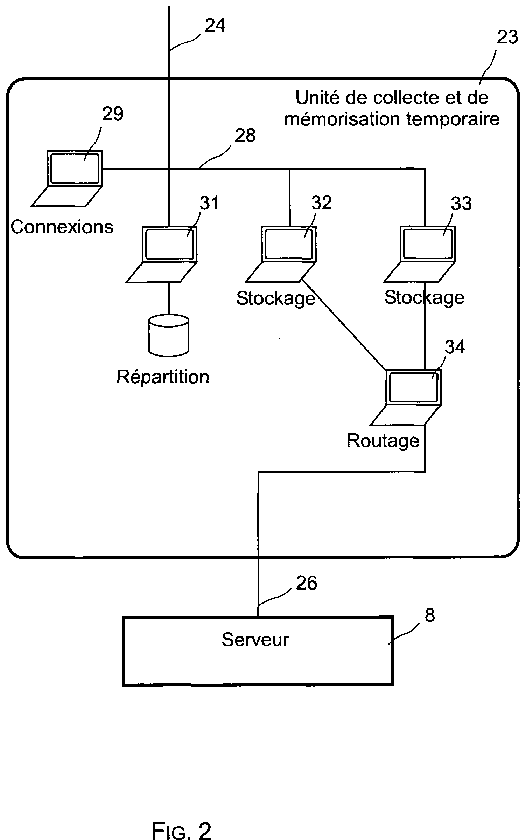

L'unité 23 est représentée schématiquement en figure 2. Elle comporte plusieurs terminaux informatiques reliés entre eux par un réseau local 28, et qui sont également reliés au réseau téléphonique 9 et au serveur 8 par les liaisons filaires 24 et 26.

Plus particulièrement, L'unité 23 comporte un terminal d'appels téléphonique 29 apte à se connecter à chacun des compteurs isolés 12, 13, 14, via le réseau téléphonique 9, pour récupérer les données de consommations de ces compteurs.

Une fois reçues dans le terminal 29 les données issues d'un compteur sont transmises à un second terminal, repéré par 31, et qui constitue un répartiteur de données. Ce répartiteur 31 adresse les données de consommation reçues à plusieurs autres terminaux, repérées ici par 32 et 33, qui sont des terminaux de stockage redondants.

Les terminaux de stockage 32 et 33 sont quant à eux reliés à un terminal de routage 34, de manière à adresser au serveur 8 les données de consommation qu'ils ont temporairement mémorisé.

En pratique, une fois que les données de consommation d'une quantité suffisante de compteurs isolés ont été mémorisée dans les terminaux 32 et 33 de l'unité 23, elles sont transmises au serveur 8 par le terminal de routage 34.

Cette transmission peut être assurée par paquets, conformément au protocole de communication utilisé entre l'unité 23 et le serveur 8, mais les donnés de consommation de plusieurs compteurs isolés sont transférées conjointement par cette transmission.

Il faut noter que d'une façon générale, des communications bidirectionnelles sont établies entre les compteurs isolés 12 à 14 et l'unité 23 : l'unité 23 interroge successivement chaque compteur isolé pour requérir l'émission des données de consommation, la collecte des données chaque compteur isolé étant ainsi assurée de façon entièrement autonome par l'unité 23. De manière analogue, des mises à jour du logiciel système de chaque compteur isolé peuvent être émises par l'unité 23 pour être installées dans ces compteurs.

Dans l'exemple des figures, l'unité 23 est matérialisée par des terminaux informatiques qui sont distincts du terminal exploitant le serveur. Mais cette unité 23 peut aussi être simplement une application logicielle distincte de l'application constituant le serveur 8. L'application constituant l'unité 23 et le serveur 8 peuvent ainsi être exploitées par un même et unique terminal informatique.

L'invention apporte notamment les avantages suivants :
Elle permet de gérer des compteurs électriques isolés avec un serveur dédié au traitement d'informations issues de serveurs réunis en grappe, sans qu'il n'y ait de modification à apporter à ce serveur.

Pour le serveur, il n'y a pas de différence de gestion entre les compteurs reliés par grappes et les compteurs isolés, puisque les données provenant du concentrateur de terrain 4 et de l'unité 23 sont adressées au serveur 8 dans le même format. L'unité 23 propose ainsi la même interface logique que le concentrateur de terrain 4.

L'unité 23 permet ainsi de réduire la charge du serveur, puisque ce dernier n'a plus à gérer les communications avec chaque compteur isolé ni même un agenda lui indiquant à quel moment les compteurs isolés doivent être relevés.

Les ressources nécessaires au fonctionnement du serveur sont ainsi réduites, et l'optimisation du serveur est significativement facilitée par le fait qu'il n'a plus à traiter qu'un unique format de données d'entrée.

Du fait de la redondance des terminaux de stockage de données 32 et 33, les données de consommation qui ont été collectées dans l'unité 23 ne peuvent être perdues.

## Revendications

1. Procédé pour relever à distance des données de consommation électrique, dans un système comportant des compteurs électriques isolés (12, 13, 14) et un serveur (8) de traitement des données de consommation de chaque compteur isolé (12, 13, 14), chaque compteur électrique isolé (12, 13, 14) étant pourvu de moyens de communication (16, 18, 21) pour transmettre les données de consommation qui lui sont propres, via un réseau de communication (9) de type téléphonique filaire ou mobile, **caractérisé en ce que** les données de consommation de plusieurs compteurs isolés (12, 13, 14) sont d'abord transmises via le réseau de communication (9) de type téléphonique filaire ou mobile, à une unité (23) assurant la collecte et la mémorisation temporaire des données de consommation de plusieurs compteurs isolés (12, 13, 14), et **en ce que** les données de consommation temporairement mémorisées par cette unité (23) sont ensuite adressées conjointement au serveur (8), l'unité de collecte interrogeant successivement chaque compteur isolé pour requérir l'émission des données de consommation, le serveur établissant des relevés de consommation à partir des données de consommation, l'unité (23) étant reliée au serveur (8) par une liaison filaire, ou étant intégrée dans un même terminal informatique que le serveur.

2. Procédé selon la revendication 1, dans lequel les données de consommation de plusieurs compteurs isolés distincts (12, 13, 14) sont converties dans un même format avant d'être adressées au serveur (8).

3. Système pour la mise en oeuvre du procédé selon la revendication 1 ou 2, dans lequel le serveur (8) et l'unité (23) assurant la collecte et la mémorisation temporaire des données de consommation correspondent à des terminaux informatiques distincts.

4. Système selon la revendication 3, dans lequel l'unité (23) assurant la collecte et la mémorisation temporaire des données de consommation comporte plusieurs terminaux informatiques (29, 31, 32, 33) interconnectés par un réseau local (28), et en ce que les données de consommation des compteurs isolés (12, 13, 14) sont mémorisées dans au moins deux terminaux distincts (32, 33) de façon redondante.

5. Système selon la revendication 4, dans lequel l'unité (23) assurant la collecte et la mémorisation temporaire des données de consommation comporte un terminal informatique (29) dédié aux transferts de données depuis chaque compteur isolé vers l'unité (23).

6. Unité destinée à être reliée, d'une part, à des compteurs électriques isolés (12, 13, 14) directement via un réseau de communication (9) de type téléphonique filaire ou mobile, et d'autre part, à un serveur (8) de traitement de données de consommation de chaque compteur isolé (12, 13, 14), l'unité interrogeant successivement chaque compteur isolé pour requérir l'émission des données de consommation, l'unité assurant la collecte et la mémorisation temporaire des données de consommation des compteurs isolés (12, 13, 14), et adressant conjointement les données de consommation au serveur, l'unité (23) étant reliée au serveur (8) par une liaison filaire, le serveur (8) et l'unité (23) correspondant à des terminaux informatiques distincts.

7. Unité selon la revendication 6, comportant un terminal informatique (29) dédié aux transferts de données depuis chaque compteur isolé vers l'unité (23).

## Patentansprüche

1. Verfahren zum Fernauslesen von Stromverbrauchsdaten in einem System, das einzelne elektrische Zähler (12, 13, 14) und einen Server (8) zur Verarbeitung der Verbrauchsdaten jedes einzelnen Zählers (12, 13, 14) umfasst, wobei jeder einzelne elektrische Zähler (12, 13, 14) mit Kommunikationsmitteln (16, 18, 21) versehen ist, um die ihm eigenen Verbrauchsdaten über ein Kommunikationsnetz (9) nach Art eines drahtgebundenen oder mobilen Telefonnetzes zu übertragen, **dadurch gekennzeichnet, dass** die Verbrauchsdaten mehrerer einzelner Zähler (12, 13, 14) zunächst über das Kommunikationsnetz (9) nach Art eines drahtgebundenen oder mobilen Telefonnetzes zu einer Einheit (23) übertragen werden, die die Erfassung und die temporäre Speicherung der Verbrauchsdaten mehrerer einzelner Zähler (12, 13, 14) sicherstellt, und dass die von dieser Einheit (23) temporär gespeicherten Verbrauchsdaten anschließend gemeinsam an den Server (8) gesendet werden, wobei die Erfassungseinheit nacheinander jeden einzelnen Zähler abfragt, um das Senden der Verbrauchsdaten anzufordern, wobei der Server Verbrauchsauslesungen anhand der Verbrauchsdaten erstellt, wobei die Einheit (23) mit dem Server (8) über eine Drahtverbindung verbunden ist, oder in einem selben Computerterminal wie der Server integriert ist.

2. Verfahren nach Anspruch 1, bei dem die Verbrauchsdaten mehrerer unterschiedlicher einzelner Zähler (12, 13, 14) in ein gleiches Format umgewandelt werden, ehe sie an den Server (8) gesendet werden.

3. System zum Durchführen des Verfahrens nach Anspruch 1 oder 2, bei dem der Server (8) und die Einheit (23), die die Erfassung und die temporäre Speicherung der Verbrauchsdaten sicherstellt, unterschiedlichen Computerterminals entsprechen.

4. System nach Anspruch 3, bei dem die Einheit (23), die die Erfassung und die temporäre Speicherung der Verbrauchsdaten sicherstellt, mehrere Computerterminals (29, 31, 32, 33) umfasst, die über ein lokales Netz (28) miteinander verbunden sind, und dass die Verbrauchsdaten der einzelnen Zähler (12, 13, 14) in mindestens zwei unterschiedlichen Terminals (32, 33) auf redundante Weise gespeichert sind.

5. System nach Anspruch 4, bei dem die Einheit (23), die die Erfassung und die temporäre Speicherung der Verbrauchsdaten sicherstellt, einen Computerterminal (29) umfasst, der für Übertragungen von Daten von jedem einzelnen Zähler zur Einheit (23) bestimmt ist.

6. Einheit, die dazu bestimmt ist, einerseits direkt über ein Kommunikationsnetz nach Art eines drahtgebundenen oder mobilen Telefonnetzes mit den einzelnen elektrischen Zählern (12, 13, 14) verbunden zu werden, und andererseits mit einem Server (8) zur Verarbeitung der Verbrauchsdaten jedes einzelnen Zählers (12, 13, 14), wobei die Einheit nacheinander jeden einzelnen Zähler abfragt, um das Senden der Verbrauchsdaten anzufordern, wobei die Einheit die Erfassung und die temporäre Speicherung der Verbrauchsdaten der einzelnen Zähler (12, 13, 14) sicherstellt, und die Verbrauchsdaten gemeinsam zum Server sendet, wobei die Einheit (23) mit dem Server (8) über eine Drahtverbindung verbunden ist, wobei der Server (8) und die Einheit (23) unterschiedlichen Computerterminals entsprechen.

7. Einheit nach Anspruch 6, umfassend einen Computerterminal (29), der für Datenübertragungen von jedem einzelnen Zähler zur Einheit (23) bestimmt ist.

## Claims

1. A method of remotely reading electricity consumption data in a system that includes isolated electricity meters (12, 13, 14) and a server (8) for processing consumption data from each isolated meter (12, 13, 14), each isolated electricity meter (12, 13, 14) being provided with communications means (16, 18, 21) for transmitting the consumption data specific thereto over a communications network (9) of the wired or mobile telephone network type, the method being **characterized in that** the consumption data from a plurality of isolated meters (12, 13, 14) is initially transmitted over the wired or mobile telephone type communications network (9) to a unit (23) that collects and stores temporarily the consumption data from a plurality of isolated meters (12, 13, 14), and **in that** the consumption data stored temporarily by the unit (23) is subsequently sent in grouped manner to the server (8), the collection unit interrogating each isolated meter in succession in order to request the transmission of consumption data, the server establishing consumption statements from the consumption data, the unit (23) being connected to the server via a wired connection or being integrated in the same computer terminal as the server.

2. A method according to claim 1, wherein the consumption data from a plurality of distinct isolated meters (12, 13, 14) is converted into a common format prior to being sent to the server (8).

3. A system for implementing the method according to claim 1 or claim 2, wherein the server (8) and the data collection and temporary storage unit (23) for the consumption data correspond to distinct computer terminals.

4. A system according to claim 3, wherein the unit (23) for collection and temporary storage of consumption data comprises a plurality of computer terminals (29, 31, 32, 33) that are interconnected by a local network (28), and wherein the consumption data from the isolated meters (12, 13, 14) is stored in at least two distinct terminals (32, 33) in redundant manner.

5. A system according to claim 4, wherein the unit (23) for collection and temporary storage of consumption data includes a computer terminal (29) dedicated to transferring data from each isolated meter towards the unit (23).

6. A unit to be connected to isolated electricity meters (12, 13, 14) on one side directly over a wired telephone communications network or a mobile telephone communications network (9), and to a server (8) for processing consumption data from each isolated electricity meter (12, 13, 14) on the other side, the unit interrogating each isolated meter in succession in order to request the transmission of consumption data, the unit collecting and storing temporarily the consumption data from the isolated electricity meters (12, 13, 14), the unit (23) sending the consumption data in grouped manner to the server, the unit (23) being connected to the server (8) via a wired connection, the server (8) and the unit (23) corresponding to distinct computer terminals.

7. The unit according to claim 6, including a computer terminal (29) dedicated to transferring data from each isolated electricity meter towards the unit (23).
